# EUROPEAN PATENT APPLICATION

(11) **EP 1 892 446 A2**
(43) Date of publication of application: **27.02.2008**
(21) Application number: 07114157.6
(22) Date of filing: 10.08.2007
(51) Int. Cl.: F16K 31/04

(54) **Control device for a modulating valve shutter and modulating valve comprising such a device.**

(30) Priority: 25.08.2006 IT BG20060042
(71) Applicant: G20 Engineering S.r.l., 29013 Carpaneto, PC (IT)
(72) Inventor: Rapaccioli, Marco, I-29100, Piacenza (IT)
(74) Representative: Giavarini, Francesco

(57) **Abstract**

The present invention relates to a control device for one or more shutters of a valve for fluid flow modulation. The control device (1) according to the invention comprises an electric motor (11) and an electro-magnetic clutch (99) provided with a first operative portion (66) operatively connected to the electric motor (11). The electro-magnetic clutch (99) also comprises a second operative portion (62) connected to at least one transmission shaft (77). The clutch (99) is completed by an electro-magnet (24) for connecting/disconnecting the first portion (66) to the second portion (62) in presence/absence of electric supply. The control device (1) also comprises a thrust kinematic mechanism operatively associated to the transmission shaft (77) and provided with at least one cinematic component operatively connectable to one or more shutters of a valve for fluid flow modulation. More precisely the thrust kinematic mechanism is configured to transform the turning motion of the transmission shaft (77) into a translating motion of said one or more shutters.

## Description

This invention relates to a control device for one or more shutters of a valve for fluid flow modulation. The invention also relates to a modulating valve, preferably for modulating the gas fuel flow of an atmospheric burner, comprising a control device according to the invention.

Fluid fuel modulating valves, especially those used for gas fuel modulating (called "gas valves"), notoriously enable the modulation of the power supplied by the burner operating on flow rate and pressure of the fuel carried to the same burner. Such valves work according to two different and by now well known modalities: the first one, pertaining to high-low modulating valves, where the power supplied by the burner is equivalent to an average of maximum-minimum powers (high-low-off); the second one, pertaining to full modulating valves, where all the power values, comprised between a maximum and minimum, can be stably applied in function of the time and needs.

On-off valves are substantially similar -for their function modalities- to servo-controlled registers which, further to an ignition request of the burner, enable the fuel flow through the whole-opening of passage ways by means of an on-off movement of a shutter. In full modulating valves, always further to a power request by the burner, it is possible to obtain fuel variable flow by means of a gradual moving of one or more shutters with respect to the fuel flow passage ways. In this manner, thanks to the shutters geometrical action, the flow passage ways can achieve different flow coefficients.

For this kind of use, shutters have an axial actuation which can be performed in different ways; most commonly for on-off valves, it is performed by electro-magnetic coils which further to a fuel request. More precisely, the coils, thanks to a well-known physics law, start up themselves causing the motion of a permanent magnet directly or indirectly connected to the shutter. Full modulating valves usually comprise a modulator electrically supplied by variable currents which are proportional to the requested power. The modulator causes a controlled movement of a permanent magnet also directly or indirectly connected to the shutter.

Among the functions of these valves, there is the possibility to select (by calibrating the starting and final work position of the shutter) the maximum and minimum fuel flow (power range selection) and to stabilize as much as possible the fluid flow by pressostatic devices. These latter enable pressure modulations and consequently fluid flow modulations owing to a change of the fluid inlet pressure into the device. Another function of these valves is that of causing the prompt stop of the fluid flow to the burner when there are faults or a request fulfilment, also if there is an electric power accidental interruption.

From what has been here explained and considering the functions requested to a valve in a modulating power system (full modulation), the axial movement transmission of one o more shutters inside the valve is absolutely important. As already explained, most of the known modulating valves involves the use of "coil shutter" controlled by devices (electromagnets) which generally interact in an indirect manner on the shutters. As a matter of fact, the movement transmission to the shutters is performed by pressostatic devices provided with membranes which are affected by volumetric variations. These latter are caused into appropriate chambers by actuators directly controlled by the coils. The imprecision and the dynamic resolution of the used coil, also due to the current oscillations which affect control systems, do not allow precise movements of the shutters. Said movements are not suitable to obtain flow rate variations which sometimes must be necessarily very small.

On the basis of these considerations, the main aim of the present invention is to provide a control device of a shutter of fluid modulating valve which will enable the drawback mentioned above to be overcome.

Within this aim, a purpose of the present invention is to provide a control device of a shutter of a fluid modulating valve which can perform precise and fast axial movements of the shutters in order to give a more precise and faster reply to the flow rate needs.

Another purpose of the present invention is to provide a control device which enables a stable movement independently from hardly manageable factors such as, for example, electric current oscillations.

Not the last purpose of the present invention is to provide control device that is both extremely reliable, relatively easy to be manufactured and at competitive price.

The above aim and purposes, as likewise others that will emerge more clearly from the description, are achieved by a control device for modulating valve shutter according to what indicated in Claim 1 and in its dependent claims.

One of the main advantages of the present invention can be seen in the mechanical configuration of the control device which favourably enables a constant and precise control of the position of one or more shutters. Moreover, as it will be pointed out in the description, the device according to the invention enables the valve to work in active safety even in case of accidental lack of electric power.

Other advantages of the invention, will be better shown during the description of preferred, but not exclusive, embodiments of the control device according this invention, illustrated by way of non-limiting examples in the attached drawings, wherein:
- Figure 1 is a perspective view of a fluid fuel modulating valve comprising a control device according to the present invention;
- Figure 2 is an exploded view of a control device according to the present invention;
- Figure 3 is an exploded view of the valve of Figure 1;
- Figures 4 and 5 are lateral views of the valve of Figure 1;
- Figure 6 is a section view according to the line "VI-VI" of Figure 4;
- Figure 7 is a section view according to the line "VII-VII" of Figure 4;
- Figure 8 is a section view according the line "VIII-VIII" of Figure 5;

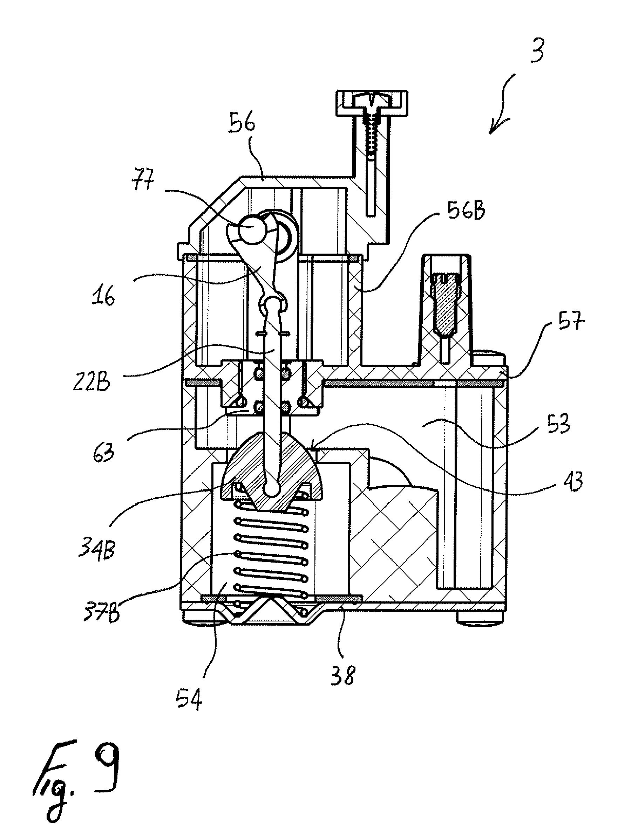

- Figure 9 is a section view according to "IX-IX" line in Figure 4.

With reference to the cited figures, the control device 1 according to the invention can be favourably used to control one or more shutter of a fluid flow modulating valve which, in its essential shape, will comprise at least a first and a second chamber, respectively provided with an inlet opening and an outlet opening for the access and exit of the fluid from the valve. For the working of the valve, the two chambers will be communicating one with another through a passage way which defines a seat for at least one shutter. The present invention relates also to a valve provided with the just mentioned features and characterised by the fact that it comprises a control device 1 for its shutter according to what hereinafter indicated.

It is to be pointed out that the control device 1 according to the invention is particularly suitable for full modulating valves although they are also a valid alternative to control devices traditionally used for on-off valves.

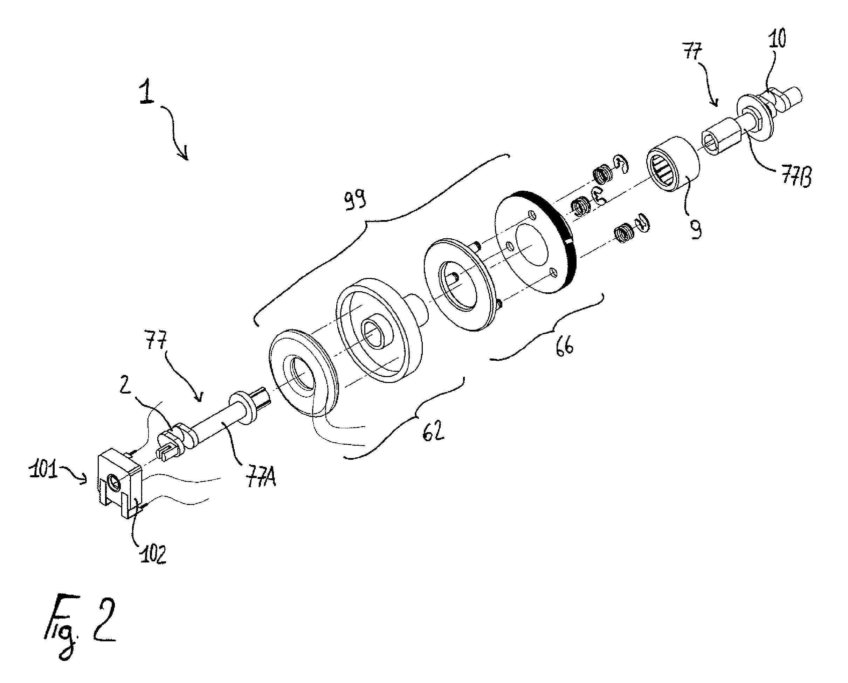

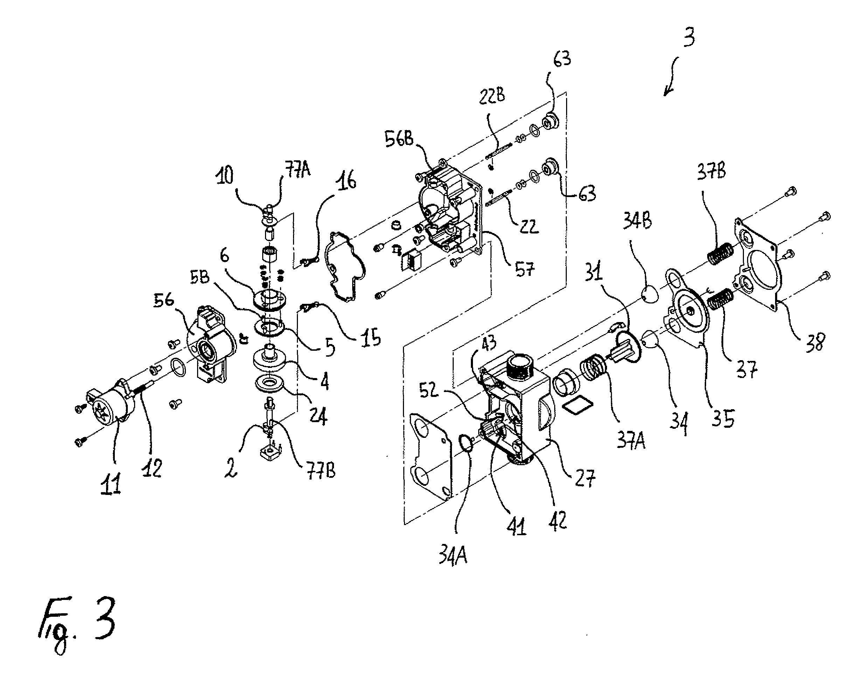

With reference to figures 2 and 3, the control device 1 according to the invention essentially comprises an electric motor 11, an electro-magnetic clutch 99, associated to a transmission shaft 77, and a thrust kinematic mechanism. Also this latter is associated to the transmission shaft 77 and is operatively connectable to the shutter to be moved.

The electric motor 11 supplies the mechanical power necessary for the working of the control device 1 and it can be chosen among different kinds traditionally known. A type of electric motors known as "stepper motors" has been revealed to be particularly suitable to the purpose of the present invention. In such motors, the rotor moves within a fixed angle in reply to an impulse coming from a control element. More precisely this kind of motors performs very small movements of the shaft. Such movements can be always repeated and they are not originated by current variation, but by the synchronized application of power to the windings which constitute the stator of the motor. The frequency variation of the power current to the stator allows to modulate rightly the motor shaft rotating speed with small resolutions. As it will be shown afterwards, these features allow a total and direct control of the shutters and they consequently optimise the modulation performed by the valve giving it great versatility, precision and use field.

With reference to Figure 2, the electro-magnetic clutch 99 is provided with a first operating portion 66 operatively connected to the electric motor 11, and with a second operating portion 62 connected to at least one transmission shaft 77. The clutch 99 is completed by at least one electro-magnet 24 (see Figure 3) for connecting/disconnecting the first portion 66 to the second portion 62 in presence/absence of electric supply to the same electro magnet. In other words the electro-magnetic clutch 99 allows the electric motor 11 to be connected/disconnected to the transmission shaft 77 in order to perform or not to perform the rotation of this latter.

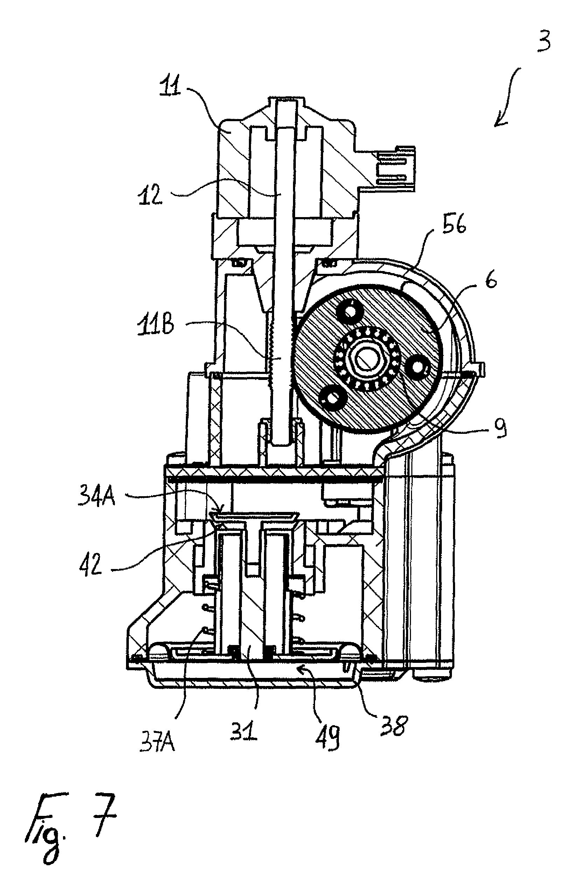

The exploded view in Figure 2 enables to observe in details the operating portions 66 and 62 which form the electro-magnetic clutch 99. The first operating portion 66 comprises a first clutch disc 5 connected to a gear wheel 6 which is freely fitted, for example by a roll bearing 9, on the transmission shaft 77. By this way, the gear wheel 6 causes the rotation of the transmission shaft 77 only when the two operating portions 66 and 62 of the electro-magnetic clutch are mutually connected. According to a preferred embodiment of the invention, the gear wheel 6 is directly rotated by the shaft 12 of the electric motor 11 and more precisely by a thread portion 11B (see embodiment illustrated in Figure 7) provided on the same shaft likewise to a worm screw. In order to enable the two cogged bodies (the wheel 6 and the thread portion 11B) engage one to another, the electric motor 11 is directed in such a way that the rotating axis of the shaft 12 is substantially orthogonal to the plane on which the gear wheel 6 lays. This plane being orthogonal to the wheel rotating axel.

It is to be understood that this kind of transmission from the electric motor 11 to the gear wheel 6 is only a preferred embodiment of the invention and for this reason it is absolutely not exclusive. In an alternative embodiment, for example, the rotation could be transferred to the gear wheel 6 by means of a further gear wheel mounted on the shaft 12 of the electric motor 11. In this operative possibility the rotating axis 11 would be parallel to that of the gear wheel 6 and consequently to that of the transmission shaft 77. In a further operative configuration the axis of the transmission shaft 77 could be aligned to that one of the shaft 12 of the electric motor 11. In this case the gear wheel 6 could be directly connected to the shaft of the electric motor 11 by means of a reduction gear.

The gear wheel 6 is operatively connected to the first clutch disc 5 by means of a plurality of dragging pins 5B. This solution allows a cinematic continuity between the two parts (the wheel 6 and the disc 5) so that a rotation of the gear wheel 6 corresponds to a rotation of the first clutch disc 5. In the illustrated solution each dragging pin 5B is surrounded by an elastic spring 5C which acts favourably as a spacer between the gear wheel 6 and the first clutch disc 5.

The second operative portion 62 of the electro-magnetic clutch 99 comprises a second clutch disc 4 rigidly fitted on the transmission shaft 77 in such a way the rotation of the clutch disc 4 (generated by the contact with the first clutch disk 5) is transformed in a rotation of the transmission shaft 77. More precisely the second clutch disc 4 is fitted in a position near to the first clutch disc 5 which, owing to the activation of the electro-magnet 24, moves toward the second disc 4 to transmit the motion. The electro-magnet 24 is operatively arranged in a position adjacent to the second clutch disc 4 so that both clutch discs 4,5 are influenced by electro-magnetic effects.

With reference again to Figures 2 and 3, the control device 1 according to the invention is characterised by the fact it comprises a thrust kinematic mechanism powered by the transmission shaft 77 and provided with a kinematic component operatively connectable to one or more valve shutters in order to cause their motion. More particularly this thrust kinematic mechanism is configured to transform the rotating motion of the transmission shaft 77 into a translation motion of the shutter 34,34B and vice versa.

In order to perform this motion transformation, according to a preferred embodiment of the invention, the thrust kinematic mechanism is configured according to the mechanical principle commonly called "connecting rod-crank". In fact it comprises at least a crank provided on the transmission shaft 77 and a connecting rod connected, in correspondence to a first end (big end), to the crank through a hinge coupling. In correspondence of a second end (small end) opposite to the first one, the connecting rod is connected to a thrust pin by means of another hinge coupling. The thrust pin is actually the real cinematic component connectable to one or more shutters and it is at least partially inserted sliding into straight slide which keeps its motion straight.

By means of the thrust kinematic mechanism here described, the crank rotating motion (synchronised with the transmission shaft 77), is transformed in a translation of the thrust pin and consequently of the shutter connected therewith. To be more precise this motion transformation is performed by means of the contemporary action of the connecting rod and of the straight slide where the pin slides.

The control device 1 illustrated in Figures 2 and 3 is configured so as to allow the simultaneous and synchronized motion of a couple of shutters 34,34B. For this reason the thrust kinematic mechanism comprises a pair of crank 2,10 provided on the transmission shaft 77, and a pair of connecting rods 15,16. Each of said rods 15,16 is connected, in correspondence of a first end, to one of the cranks 2,10. A couple of thrust pins 22,22B is arranged for the motion of the shutters 34,34B. More precisely each thrust pin 22,22B is sliding inserted into a straight slide and it is operatively connected to one of said connecting rods 15,16 in correspondence of a their second end opposite to the first one.

On the basis of what explained, the working of control device 1 according to the invention is easily understandable. The torque supplied to the shaft 12 by the stepper motor 11 is transmitted to the gear wheel 6 which forms the first operating portion 66 of the electro-magnetic clutch 99. In presence of electric supply, the clutch 99 connects its two operating parts 66,62 each other so as to rotate the transmission shaft 77 and consequently the two crank 2,10 provided on it. These latter, on their turn, move each one of the connecting rod 15,16 which transform the rotation in a translation. Each connecting rod 15,16 acts on one of the thrust pins 22,22B directly connected to a corresponding shutter 34,34B. This latter translates axially causing the flow rate variations. The shutters 34,34B reach the same position since the translating motion is generated by the same transmission shaft 77 and by the same thrust kinematic mechanism.

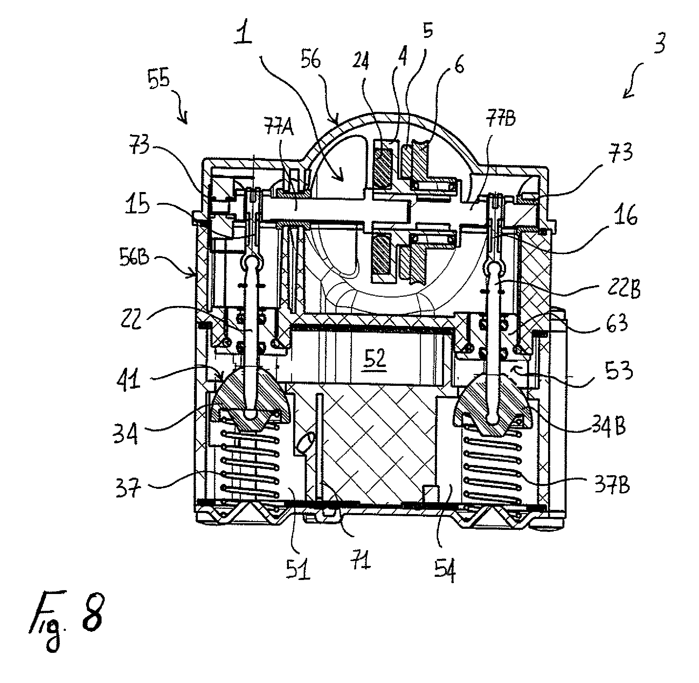

Coherently to the purposes of the invention, the configuration of the control device 1 allows to obtain precise and fast axial movements of the shutters 34,34B which enable consequently a fast and precise reply from the valve 3. In the case it is necessary to interrupt immediately the fluid supply (both in normal and in extraordinary working conditions), the stop of electric supply to the electro-magnetic clutch 99 causes the disconnection between the electric motor 11 and the transmission shaft 7. That means that the torque generated by the stepper motor 11 is not transmitted anymore (via the cranks 2,10) to the connecting rods 15,16 of the thrust kinematic mechanism and therefore to the shutters 34,34B. This condition set free the transmission shaft 77 to rotate on its own supports. The cranks 2,10 of the transmission shaft will be subjected to the force of the return springs 37 and 37B arranged inside valve 3 in order to keep both the shutters 34,34B in the closed position (see for example Figure 8).

Concerning this, the position of the cranks 2 and 10 and that of their corresponding connecting rods 15 and 16 could be favourably fixed along the whole expected movement field. In other words said position is fixed so as to never correspond to the dead centers of the thrust kinematic mechanism.

The force performed by the return springs 37,37B can not find oppositions. That causes the immediate shutting movement of the shutters 3 for the axial action of their corresponding connecting rods 15,16. The fluid supply is thus interrupted and valve 3 reaches a shut down configuration. The same procedure is performed in the case of an accidental electric supply interruption. The system therefore is in active safety.

According to a preferred embodiment of the invention, the control device 1 favourably comprises a position sensor 101 arranged to generate a specific feed-back signal characteristic of the position reached by the shutters 34,34B controlled by means of the device itself. For this purpose, it is possible to use, for example, an encoder or another sensor able to detect the angle position reached by the transmission shaft 77. This angle position is a direct function of the position reached by the shutters 34,34B. The feed-back signal is favourably sent from the position sensor 101 to an element which controls the rotation of the electric motor 11.

In a possible embodiment, shown for example in figure 2, the position sensor 101 is favourably arranged next to one end of the transmission shaft 77. More precisely a mobile part of sensor 101 is fixed to this end so as to reach the same angle position of the shaft 77. In this solution, a fixed part 102 of the sensor, which supports the mobile one, provides also the support for the same transmission shaft 77.

With reference again to figure 2, from a constructive point of view, the transmission shaft 77 can be favourably produced in a first part 77A and a second part 77B coaxially connected to each other by a grooved parts coupling. This special solution simplifies the control device assembling operations, especially the positioning of the electro-magnetic clutch 99 on the transmission shaft 77. Anyway it is to be considered as part of the invention concept the possibility to produce the transmission shaft in a single body, or in a number of parts higher than that indicated.

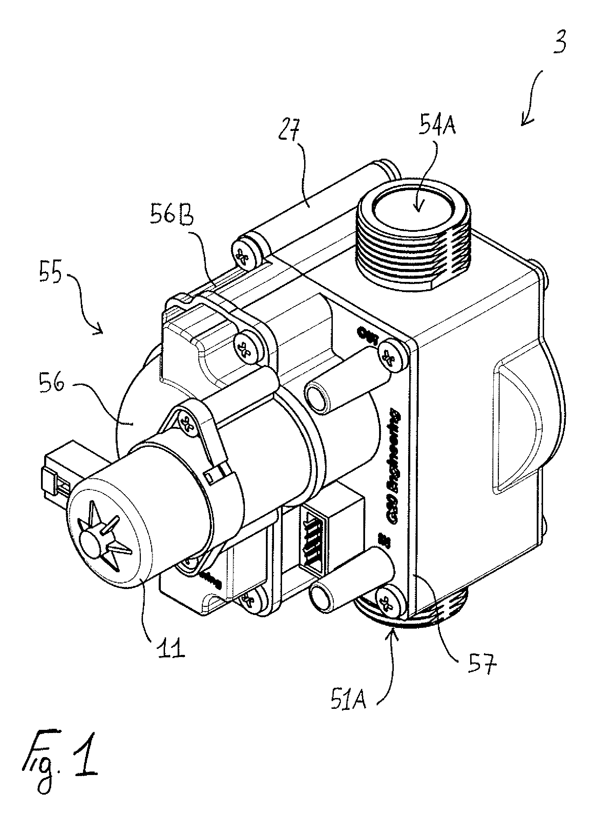

As above indicated, Figure 1 and those derived from it concern a modulating valve provided with a control device according the this invention. In particular the illustrated valve is a full modulating valve and it is especially appropriate for modulating the gas fluid flow such as, for example, fuel gas used for a domestic boiler burner.

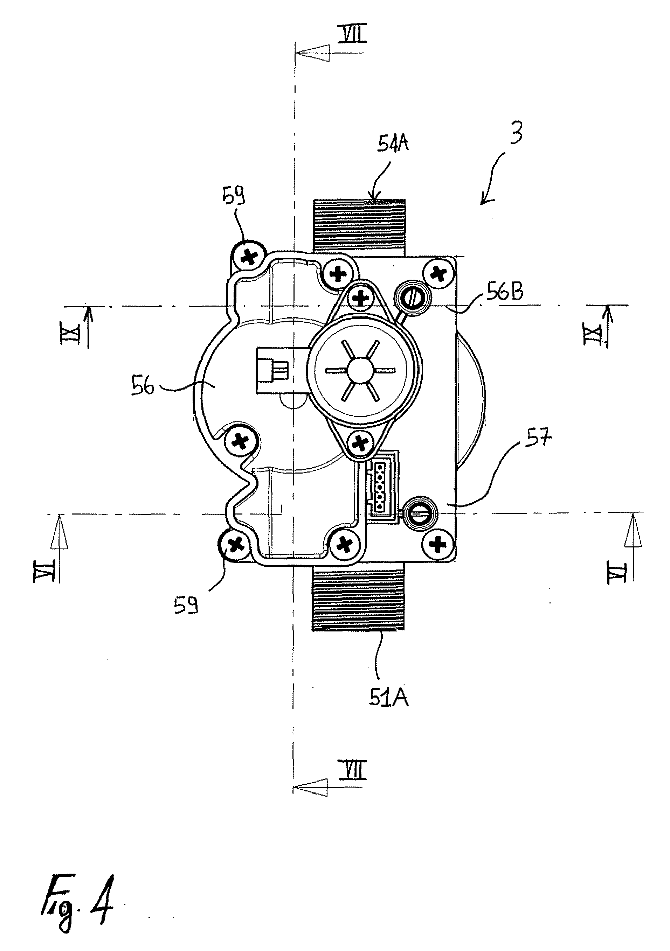

Figure 1 is a perspective view which allows to observe the structure of the valve 3 consisting of a valve body 27 connected to a containing module 55 in which the control device 1 is seated. The containing module 55 is formed by a first shell 56 which couples with a second shell 56B provided with a joint surface 57. This latter allows the connection of the module 55 to a first side of the valve body 27 while on a second side of said body 27, substantially opposed to the first one, a cap 38 is connected in order to complete the external structure of the valve. Figure 4 is a lateral view of the valve illustrated in Figure 1 and it allows to observe how the shells 56 and 56B can be connected to each other by traditional connecting screws 59 which can be favourably used also for connecting the contact surface 57 of the second case 56B to the valve body 27.

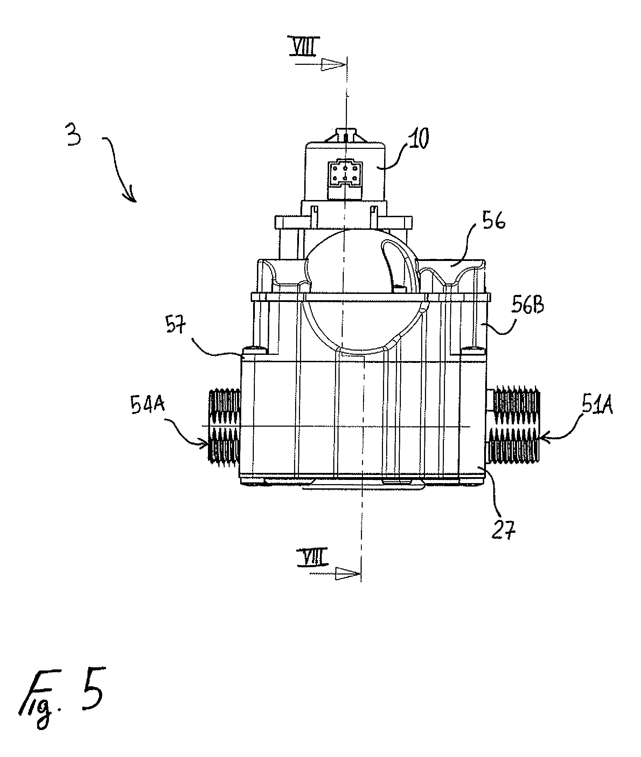

The two cases 56 and 56B, which compose the containing module 55, are shaped so ad to generate a sufficient volume for containing almost all the components of the control device 1. Moreover figures 5 and 7 allow to observe how, according to the invention, the two shells 56 and 56B comprise the supports necessary to assure the functionality of the different components of the control device 1. With reference to Figure 8, for example, the transmission shaft 77 is arranged on end supports 73 connected to the first shell 56. The same figure shows that the contact surface 57 of the second case 56B is provided with bushings 63. These latter provide the slides necessary to the sliding of the thrust pins 22,22B connected to corresponding connecting rods 15 and 16 of the thrust kinematic mechanism.

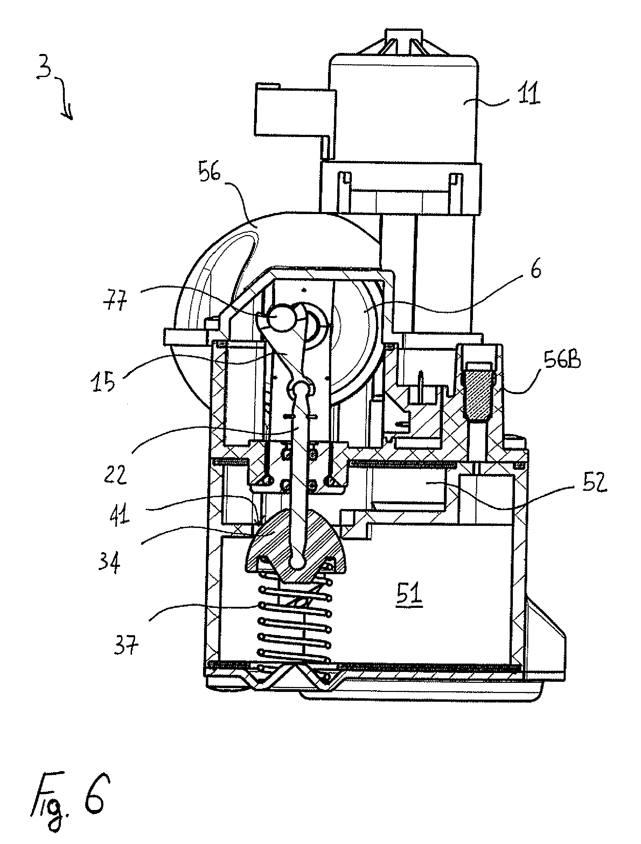

According to a preferred embodiment of the modulating valve 3, the valve body 27 (preferably made of die-cast aluminium) defines four chambers 51,52,53,54 with different volumes. The first chamber 51 (shown in the section view of Figure 6) is provided with an inlet opening 51A (see Figure 5) for the access of the fluid into the valve. The first chamber 51 is communicating with a second chamber 52 (see always Figure 6) by a first passage way 41 which defines the seat for a first shutter 34. This latter, thanks to a first return spring 37, in a no working condition, is positioned against the seat so as to obstruct completely the first passage way 41 for blocking up the fluid passage. The axial motion (opening) of the first shutter 34, thanks to the control device 1, causes the passage of the fluid into the second chamber 52. This latter (see Figure 7) is delimited by a membrane 35 which is directly in contact with the fluid. This membrane 35 forms a dividing wall between the second room 52 and an adjacent plenum chamber 49 delimited by the membrane 35 and the cap 38 connected to the valve body 27. This plenum chamber 49 is directly communicating with the first chamber 51 through a capillary orifice 71. The volumetric variation obtained by the shutter opening (that is by the connection between chamber 51 and 52) causes an instantaneous pressure variation that affects the membrane 35 which is normally in a static equilibrium. Further to this variation, the membrane 35 starts moving axially for compensating the difference of pressure generated between the first chamber 51 and the plenum chamber 49.

A third chamber 53 is communicating with the second one 52 by a second passage way 42 (see always Figure 7) which forms the seat for a second shutter 34A directly connected to the membrane 35, through a corresponding support 31. The second shutter 34A reaches a precise position owing to the movement of membrane 35 combined with the action of a second return spring 37A. More precisely, the position reached by the second shutter 34A will always be proportioned to the fluid inlet pressure because this latter is generated by the differential between the pressure in the first chamber 51 and the pressure in the plenum chamber 49; the access of the fluid into the third chamber 53 will always be compensated in volume, with respect to the pressure variations which normally can be found in the main distribution line. The second return spring 37A enables a rest positioning of the second shutter 34A in order to obstruct the second passage way 42 between the second chamber 52 and the third 53.

The internal structure of the valve body 27, illustrated in the figures, is completed by a fourth chamber 54 communicating with the third chamber 53 by a third passage way 43 which forms a seat for a third shutter 34B moved by the control device 1. More precisely the third shutter 34B is able to vary the flow coefficient, by means of its own axial motion, in a perfectly synchronous and identical way to that the first shutter 34.

A third return spring 37B enables the positioning of the third shutter 34B against the seat defined by the third passage way 43 thus blocking the fluid passage in rest conditions. The fourth chamber 54 is provided with an outlet opening 54A (see Figure 4) for the exit of the flow from the valve 3.

The technical solutions used for the control device according to the invention fully satisfy the above aims and purposes. More specifically, the device especially shows its high reliability thanks to its mechanical configuration which enables to move one or more shutters precisely and quickly, inside the valve in which the device is placed. It is to be pointed out that, in case of electric power accidental interruption, the mechanical structure of the device allows the valve to reach a position of active safety. Moreover the device according to the invention shows an extremely compact configuration and at the same time it is characterised by high reliability and wide use range.

In practice, the used materials and the relative dimensions and shapes could vary according to the different needs and the state of the art.

## Claims

1. Control device (1) of one or more shutters (34,34B) of a fluid flow modulating valve (3), **characterised by** the fact that it comprises:
- an electric motor (11);
- an electro-magnetic clutch (99) provided with a first operative portion (66) operatively connected to said electric motor (11) and a second operative portion (62) connected to at least a transmission shaft (77), said electro-magnetic clutch (99) comprising at least an electro-magnet (24) for connecting/disconnecting said first portion (66) to said second portion (62) in presence/absence of electric supply;
- a thrust kinematic mechanism operatively associated to said transmission shaft (77) and provided with at least one kinematic component connectable to one or more valve shutters (34,34B), said thrust kinematic mechanism being configured so as to transform the rotating motion of said transmission shaft (77) into a translation motion of said one or more shutters (34,34B) and vice versa.

2. Control device (1) according to Claim 1, **characterised by** the fact that said first operative portion (66) of said electro-magnetic clutch (99) comprises a first clutch disc (5) connected to a gear wheel (6) which is freely fitted on said transmission shaft (77) and which is operatively connected to the shaft (12) of said electric motor (11).

3. Control device (1) according to Claim 2, **characterised by** the fact that said gear wheel (6) engages a thread portion (11B) provided on the shaft (12) of said electric motor (11).

4. Control device (1) according to Claim 2 or 3, **characterised by** the fact that said gear wheel (6) is connected to said first clutch disk (5) by means of a plurality of dragging pins (5B).

5. Control device (1) according to one or more Claims from 1 to 4, **characterised in that** said second portion (62) of said electro-magnetic clutch (99) comprises a second clutch disc (4) rigidly fitted on said transmission shaft (77) near to said first clutch disc (5) of said first operative portion (66), said electro-magnet (24) being in a position adjacent to said first (59) and second clutch disc (4).

6. Control device (1) according to one or more Claims from 1 to 5, **characterised by** the fact that said kinematic component is a thrust pin (22,22B) connected to said one or more shutters (34,34B), said thrust pin (22,22B) being at least partially and sliding inserted into a straight slide which keeps its motion straight.

7. Control device (1) according to Claim 6, **characterised by** the fact that said thrust kinematic mechanism comprises:
- at least a crank (2,10) provided on said transmission shaft (77);
- at least a connecting rod (15,16) having a first end connected to said crank (2,10) by a hinge coupling, said connecting rod (15,16) having a second end connected to said thrust pin (22,22B) by a hinge coupling.

8. Control device (1) according to Claim 7, **characterised by** the fact that said thrust kinematic mechanism comprises:
- a couple of cranks (2,10) provided on said transmission shaft (77);
- a couple of connecting rods (15,16) each of which having a first end connected to one of said cranks (2,10);
- a couple of thrust pins (22,22B) each of which connected to at least one shutter (34), each of said thrust pins (22,22B) being connected to a second end of said connecting rods (15,16) by means of a hinge coupling.

9. Control device (1) according to one or more Claims from 1 to 8, **characterised by** the fact that said electric motor (11) is a stepper-motor.

10. Control device (1) according to one or more of claims from 1 to 9, **characterised in that** it comprise a position sensor (101) arranged for detecting a feed-back signal characteristic of the position reached by said one or more shutters (34,34B), said signal being sent by said position sensor (101) to a control element for controlling said electric motor (11).

11. Control device (1) according to Claim 10, **characterised by** the fact that said position sensor (101) is arranged for detecting the angular position reached by said transmission shaft (77).

12. Modulating valve (3) comprising at least a first chamber and a second chamber respectively provided with an inlet opening and an outlet opening for the access and exit of the fluid into and out of the valve, said chambers being communicating one to another through a passage way which defines a seat for at least one shutter, said valve being **characterised in that** it comprises a control device for said at least one shutter according to one or more Claims from 1 to 11.

13. Modulating valve according to Claim 12, **characterised by** the fact that it has a structure consisting of a valve body (27) connected to a containing module (55) for containing said control device (1).

14. Modulating valve (3) according to Claim 13, **characterised by** the fact said containing module (55) is formed by a first shell (56) which couples to a second shell (56B) provided with a joint surface (57) for connecting said container module (55) to a first side of said valve body (27), said valve (3) comprising a cap (38) connected to a second side, opposite to the first side, of the valve body (27).

15. Modulating valve (3) according to one or more Claims from 12 to 14, **characterised by** the fact that said valve body (27) defines:
- a first chamber (51) provided with an inlet opening (51 A) for the access of said fluid into said valve (3);
- a second chamber (52) communicating with said first chamber (51) through a first passage way (41) which defines the seat of a first shutter (34) moved by said control device (1), said first shutter (34) being subjected to the action of a first return spring (37), said mentioned second chamber (52) being delimited by a membrane (35) which forms a dividing wall between said second chamber (52) and an adjacent plenum chamber (49), said plenum chamber (49) being defined between said membrane (35) and said cap (38), said plenum chamber (49) being communicating with said first chamber (51) by a capillary orifice(71);
- a third chamber (53) communicating to said second chamber (52) by a second passage way (42) which defines the seat for a second shutter (34A) mounted on a mobile support (31) with said membrane (35), said second shutter (34A) being subjected to the action of a second return spring (37A);
- a fourth chamber (54) provided with an outlet opening (54A) for the exit of said fluid from said valve (3), said fourth chamber (54) being communicating with said third chamber (53) through a third passage way (43) which defines the seat for a third shutter (34B) on which a third return spring (37B) operates, said third shutter (34B) being moved by said control device (1).
